# EUROPEAN PATENT APPLICATION

(11) **EP 1 703 575 A1**
(43) Date of publication of application: **20.09.2006**
(21) Application number: 05703499.3
(22) Date of filing: 05.01.2005
(51) Int. Cl.: H01M 8/00, H01M 8/04, H01M 10/44

(54) **FUEL CELL SYSTEM AND METHOD OF CORRECTING FUEL CELL CURRENT**

(30) Priority: 05.01.2004 JP 2004000493
(71) Applicant: Toyota Jidosha Kabushiki Kaisha, Toyota-shi, Aichi-ken, 471-8571 (JP)
(72) Inventor: SHIGE, Masahiro, c/o Toyota Jidosha K. K., Toyota-shi, Aichi 471-8571 (JP)
(74) Representative: Harris, Ian Richard
(86) International application number: PCT/JP2005/000260
(87) International publication number: WO 2005/067083

(57) **Abstract**

A fuel cell system in accordance with the present invention comprises a fuel cell connected to a load for supplying power thereto; a voltage regulating unit connected between the fuel cell and the load for controlling a voltage between the terminals of the load; a rectifier, which is connected to the fuel cell side from the connection portion with the voltage regulating unit, and which is between the fuel cell and the load, for preventing the reverse flow of a fuel cell current; and a current sensor for detecting a fuel cell current. This fuel cell system detects the output of the current sensor after the voltage between the terminals of the load has been raised by the voltage regulating unit and determines the correction value of the fuel cell current detected with the current sensor based on the detected current sensor output.

## Description

### BACKGROUND

The present invention relates to a fuel cell system and to a method of correcting a fuel cell current, and more particularly to a fuel cell system provided with a correction function for accurately detecting the fuel cell current based on a current sensor output of the fuel cell and to a method of correcting a fuel cell current.

Fuel cells have attracted attention as environmentally clean power sources. Because fuel cells alone can hardly respond to load fluctuations, they are known to be combined with other power sources in hybrid power source systems.

For example, Japanese Patent Application Laid-open No. 2002-118979 describes that a power source is configured by connecting a fuel cell and a battery in parallel and that the output voltage of the fuel cell can be converted by DC-DC conversion to charge the battery. A diode for preventing the current from the battery or the electric current regenerated in the load from flowing back to the fuel cell is connected to this fuel cell.

Japanese Patent Application Laid-open 2003-197229 describes that a switch for disconnecting the fuel cell from other devices is provided in addition to the diode preventing a reverse current from flowing to the fuel cell. Opening this switch makes it possible to disconnect the fuel cell from to the devices in a low-load mode and increase the efficiency of the system.

### SUMMARY

However, in the configuration described in Japanese Patent Application Laid-open No. 2002-118979, the fuel cell current sometimes does not become exactly 0 even when the fuel cell voltage is controlled to the generation termination voltage. If the fuel cell current is not 0, the 0 point correction of the fuel cell current sensor cannot be accurately conducted and the fuel cell current is measured inaccurately. From the standpoint of voltage resistance design of the system, the generation termination voltage of the fuel cell can hardly be changed in an easy manner. Therefore, the generation termination voltage of the fuel cell is difficult to make equal to the open-circuit voltage of the fuel cell.
Furthermore, if the fuel cell is disconnected from the power source wiring with a switch, as described in Japanese Patent Application Laid-open No. 2002-118979, a 0 point of the fuel cell current can be obtained, but an additional structure is necessary to resolve the problems caused by the difference in voltage during reconnection.

It is an object of the present invention to provide a fuel cell system and a method of correcting for a fuel cell current that can reliably achieve a 0 point correction of the fuel current with a simple structure.

In order to attain the above-described object, the present invention provides a fuel cell system comprising a fuel cell connected to a load for supplying power thereto; a voltage regulating unit connected between the fuel cell and the load for controlling a voltage between the terminals of the load; a rectifier, which is connected to the fuel cell side from the connection portion with the voltage regulating unit, and which is between the fuel cell and the load, for preventing the reverse flow of a fuel cell current; and a current sensor for detecting a fuel cell current. This fuel cell system detects the output of the current sensor after the voltage between the terminals of the load has been raised by the voltage regulating unit and determines the correction value of the fuel cell current detected with the current sensor based on the detected current sensor output. Furthermore, the method of correcting a fuel cell current in accordance with the present invention is a method of correcting a fuel cell current detected with a current sensor of a fuel cell connected to a load for supplying power thereto, comprising the steps of detecting the output of the current sensor after a voltage between the terminals of the load has been raised, while preventing the reverse current flow from the load side to the fuel cell side, and determining a correction value of the fuel cell current detected by the current sensor based on the detected output of the current sensor.

With the above-described configuration, the fuel cell voltage also rises following the rise of the load voltage, but because a capacitance component is present the fuel cell voltage rises with a delay with respect to the rise of the load voltage. At this time, even if the load voltage is higher than the fuel cell voltage, because the rectifier is present or because the reverse current is prevented from flowing from the load side to the fuel cell side and the current does not flow from the load to the fuel cell, the fuel cell current becomes 0. The correct correction of the fuel cell current can be done by determining the correction value of the fuel cell current based on the current output sensor at this time.

In the above-described fuel cell system, the increase in the voltage between the terminals of the load by the voltage regulating unit is preferably carried out after the voltage has been decreased from the generation termination voltage of the fuel cell. Furthermore, in the above-described method of correcting a fuel cell current, the increase in the voltage between the terminals of the load may be carried out once after the voltage has been decreased from the generation termination voltage of the fuel cell. Decreasing the voltage of the fuel cell within a fixed interval after the generation termination voltage makes it possible to obtain easily a state with a zero fuel cell current.

In the above-described fuel cell system, the interval from the decrease in the voltage between the terminals of the load from the generation termination voltage of the fuel cell to the increase of this voltage by the voltage regulating unit is 50 msec or more. Furthermore, in the above-described method of correcting a fuel cell current, the interval from the decrease in the voltage between the terminals of the load from the generation termination voltage of the fuel cell to the increase of this voltage may be set to 50 msec or more. If the load voltage is rapidly decreased, the fuel cell current rises, but it can be sufficiently attenuated if the aforementioned interval is 50 msec or more.

In the above-described fuel cell system, the increase in the voltage between the terminals of the load by the voltage regulating unit is preferably conducted up to the generation termination voltage of the fuel cell. Furthermore, in the above-described method of correcting a fuel cell current, the increase in the voltage between the terminals of the load may be conducted up to the generation termination voltage of said fuel cell. In such cases, the interval in which the fuel cell current is 0 can be extended.

In the above-described fuel cell system, the correction value is preferably determined based on an average value of the output of the current sensor within a fixed interval after the voltage between the terminals of the load has been raised by the voltage regulating unit. Furthermore, in the above-described method of correcting a fuel cell current, the correction value is determined based on an average value of the output of the current sensor within a fixed interval after the voltage between the terminals of the load has been raised.

The above-described fuel cell system preferably further comprises a voltage comparison unit for comparing a voltage between the terminals of the fuel cell and a voltage between the terminals of the load, and the correction value of the fuel cell current detected with the current sensor is preferably determined based on the output of the current sensor within an interval in which the voltage between the terminals of the fuel cell is lower than the voltage between the terminals of the load. Furthermore, in the above-described method of correcting a fuel cell current, the correction value of the fuel cell current detected with the current sensor may be determined based on the output of the current sensor within an interval in which the voltage between the terminals of the fuel cell is lower than the voltage between the terminals of the load. From these, a state with a zero fuel cell current is accurately determined.

In the above-described fuel cell system, the voltage regulating unit preferably comprises a DC voltage converter, and a battery is preferably connected to the DC voltage converter. Because a voltage is regulated with a DC voltage converter that is usually used in hybrid power source systems, a simple system that requires no special structure can be obtained.

### DESCRIPTION OF DRAWINGS

FIG. 1 is a schematic block diagram of the fuel cell system of an embodiment of the present invention;
FIG. 2 shows a current ― voltage characteristic of a fuel cell;
FIG. 3 illustrates a voltage control flow for detecting the 0 point of the fuel cell current and calculating the correction value; and
FIG. 4 is a flowchart for explaining the specific procedure of fuel cell current correction using the aforementioned voltage control flow.

### DETAILED DESCRIPTION

The embodiments of the present invention will be described below with reference to the appended drawings.

### 1. Structure of the apparatus

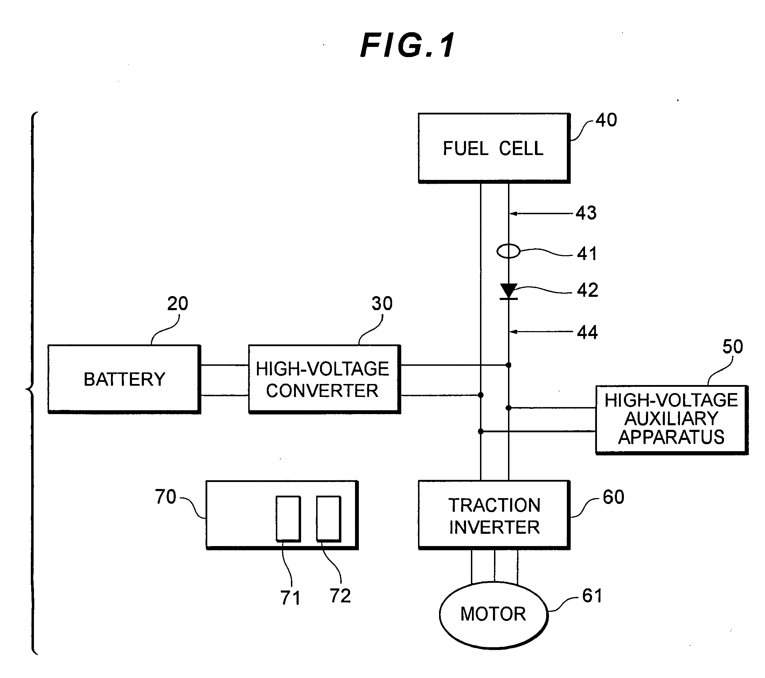

FIG. 1 is a schematic block diagram of the fuel cell system of an embodiment of the present invention. In this fuel cell system, a fuel cell 40 and a battery 20 are connected in parallel, constituting a power source, which are connected to a traction inverter 60 and a high-voltage auxiliary apparatus 50 serving as a load to supply a direct current power thereto.

A fuel cell current sensor 41, a reverse current preventing diode 42, a fuel cell voltage sensor 43, and an inverter voltage sensor 44 are provided on the fuel cell 40 side of the power source. Any sensor using an electromagnetic force can be employed as the fuel cell current sensor 41. The reverse current preventing diode 42 corresponds to a rectifier in accordance with the present invention and prevents the reverse current from flowing from the load side to the fuel cell 40. The fuel cell voltage sensor 43 detects the voltage of the fuel cell, and the inverter voltage sensor 44 detects the voltage of the load. The fuel cell 40 is a unit generating power by electrochemical reaction of hydrogen and oxygen.

A high-voltage converter 30, which is a voltage adjusting unit, is connected to the battery 20 side of the power source. The high-voltage converter 30 is a direct current voltage converter and has a function of adjusting the DC voltage inputted from the battery 20 and outputting it to a inverter 60 side and a function of adjusting the DC voltage inputted from the fuel cell 40 or a motor 61 and supplying it to the battery 20. The process of charging and discharging the battery 20 is realized by functions of the high-voltage converter. Furthermore, the input voltage to the traction inverter 60 is determined by the high-voltage converter 30. The fuel cell voltage also follows this voltage. The battery 20 also may be a secondary battery or a capacitor, provided that it is a chargeable and rechargeable accumulator of electricity.

A synchronous motor 61 linked to a drive unit such as wheels is connected to the traction inverter 60, which is a load. In the traction inverter 60, the direct current from the power source is converted into a three-phase alternating current and supplied to a synchronous motor. The high-voltage auxiliary apparatus is any apparatus requiring a high-voltage direct current power source. For example, it can be an air compressor, a hydrogen pump, a cooling water pumps, or an air conditioner.

### 2. Characteristics of fuel cell

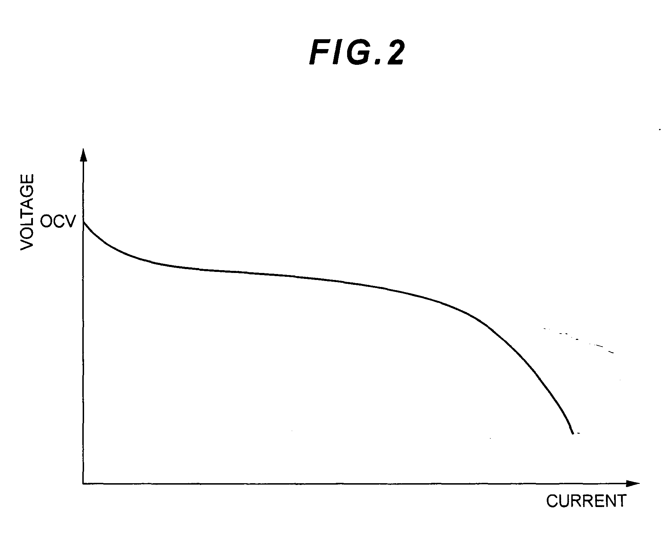

FIG. 2 shows a current ― voltage characteristic of a fuel cell. Voltage in the fuel cell generally tends to decrease with the increase in current. In particular, the fuel cell voltage at the time when the fuel cell current decreases and reaches 0 is called an open-circuit voltage (OCV) and assumed a maximum value in the output characteristic. Power generation control of the fuel cell uses this characteristic, and power generation is terminated by raising the fuel cell voltage up to the preset generation termination voltage and bringing it close to the open-circuit voltage. The fuel cell voltage can be raised with the high-voltage converter 30.

However, when the open-circuit voltage is higher than the preset generation termination voltage, the fuel cell current does not become exactly 0. Therefore, the following method is used in the present embodiment for 0 point learning of the fuel cell current.

### 3. Method of correcting

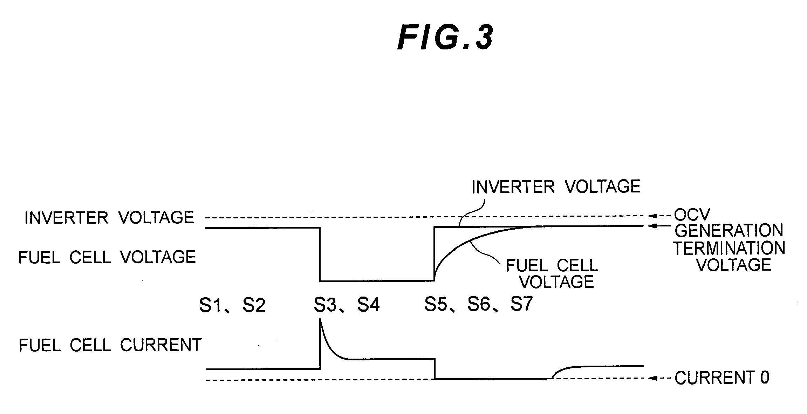

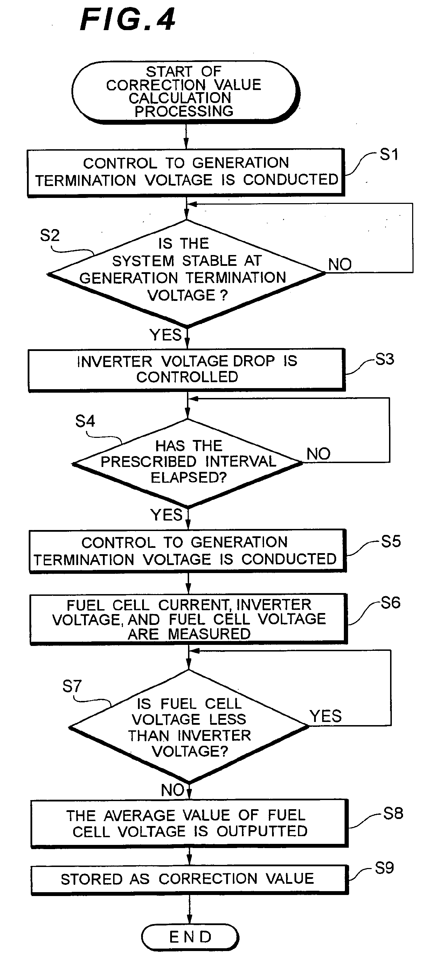

FIG. 3 shows a voltage control flowchart for detecting the 0 point of the fuel cell current and calculating the correction value of the current sensor output. Reference symbols S1 to S7 correspond to processing timing of the below-described steps S1 to S7 shown in FIG. 4.

In S1, S2, when the inverter voltage and fuel cell voltage are controlled to the generation termination voltage by the high-voltage converter 30, a very small current flows in the fuel cell 40.

In S3, S4, if the inverter voltage is once decreased by the high-voltage converter 30, the fuel cell voltage immediately follows this decrease. At this time, because a capacitor component is present in the fuel cell, a comparatively large current pulse flows from the fuel cell 40, but this current pulse is also attenuated within a short period and converged to a constant value. The current value after the convergence is determined by the fuel cell voltage after the voltage has been decreased and a current ― voltage characteristic shown in FIG. 2 and is slightly larger than the current corresponding to the generation termination voltage. The voltage can be decreased within any period, but an interval of, for example, 50 msec or more is preferred to provide for a sufficient attenuation of the current pulse. Furthermore, this period can vary depending on various conditions such as the material and number of components in the stack.

Then, in S5, an inverter voltage is again increased by the high-voltage converter 30. As a result, the inverter voltage promptly rises, but because a capacitor component is present in the fuel cell 40, the fuel cell voltage does not immediately become equal to the inverter voltage. Furthermore, because the reverse current preventing diode 42 is provided between the high-voltage converter 30, traction inverter 60 and fuel cell 40, even though a state has been assumed in which the inverter voltage is higher than the fuel cell voltage, no current flows in the fuel cell 40. Therefore, the fuel cell current becomes 0.

Therefore, in S6, S7, the output of the current sensor 41 etc. is acquired. When the output value of the current sensor 41 is I_{A} within the interval in which the fuel cell current is 0, the current sensor 41 outputs a current value which is larger by I_{A} than the actual fuel cell current (0). Therefore, this I_{A} can be considered as the correction amount. Furthermore, when a current output I was obtained with the current sensor 41 during usual operation, the fuel cell current after the correction can be found as I ― I_{A}.

Even when the inverter voltage is raised by the high-voltage converter 30, the fuel cell voltage is converged by means of a time constant RC (R is a resistance value and C is a capacitance value). Therefore, the interval in which the fuel cell current is 0 is not maintained for a long time, and if the fuel cell voltage reaches the inverter voltage, the current also starts to flow in the fuel cell. Therefore, in order to obtain a sufficient interval in which the fuel cell current is 0, it is desirable that the inverter voltage be raised to the power generation termination voltage.

Furthermore, because the interval in which the fuel cell current is 0 is limited, it is necessary to specify this period. A method comprising the steps of detecting the difference in voltage between the fuel cell voltage sensor 43 and the inverter voltage sensor 44 and taking the interval in which the inverter voltage is higher than the fuel cell voltage as an interval in which the fuel cell current is 0 is preferred as the method for specifying the interval in which the fuel cell current is 0. A method of finding the time constant RC from the resistance component R and capacitance component C of the power source circuit and a method of detecting the output change of the current sensor 41 after the inverter voltage rise and taking the output before the rise as the output of 0 current if the output of the current sensor 41 has increased over a fixed interval as a boundary can be also considered as methods for specifying the interval in which the fuel cell current is 0.

FIG. 4 is a flowchart illustrating a specific sequence of fuel cell current correction using the above-described voltage control flow. This processing is conducted by a command of a control unit 70 using a microcomputer when the correction value of fuel cell current detected by the current sensor is calculated. This control unit 70 comprises a voltage comparison unit 71 for comparing the voltage between the terminals of the fuel cell 40 and the voltage between the terminals of the loads 50, 60 and a storage unit 72 for storing the correction value (for example, the below-described average value I_{A}) of the fuel cell current.

First, in step S1, a command is sent to the high-voltage converter 30 and the output voltage is controlled to a generation termination voltage. The inverter voltage and fuel cell voltage are thereby controlled to the generation termination voltage. Then, in step S2, the outputs of the fuel cell voltage sensor 43 and inverter voltage sensor 44 are acquired and the processing waits till the fuel cell voltage and inverter voltage are stabilized at the generation termination voltage.

Then, in step S3, a command is sent to the high-voltage converter 30 and the output voltage is once decreased. As a result, the inverter voltage also drops. Once the prescribed period (in the present embodiment, 50 msec or more) has elapsed after the voltage drop in step S4, a command is again sent to the high-voltage converter 30 and the output voltage is controlled to the generation termination voltage in step S5. The inverter voltage is thereby also controlled to the generation termination voltage.

Once the output voltage of the converter 30 has been controlled to the generation termination voltage, the outputs of the fuel cell current sensor 41, fuel cell voltage sensor 43, and inverter voltage sensor 44 are immediately acquired in step S6. Here, the data are acquired, for example, by sampling the output values every 10 msec.

Then, in step S7, the output of the fuel cell voltage sensor 43 and the output of the inverter voltage sensor 44 are compared with the voltage comparison unit 71 and a decision is made whether or not the fuel cell voltage is lower than the inverter voltage. When the fuel cell voltage is lower than the inverter voltage, the measurements are continued. If not, in other words, if the fuel cell voltage is equal to or higher than the inverter voltage, the processing advances to the next step.

In step S8, the output of the current sensor 41 in an interval in which the fuel cell voltage is lower than the inverter voltage is taken out and an average value I_{A} is calculated. Because this value I_{A} serves as a correction value of the current sensor output, in step S9, I_{A} is stored as a correction value in the storage unit 72. If the output of the current sensor 41 during usual operation is denoted by I, then the fuel cell current after the correction can be calculated as I ― I_{A}.

As described hereinabove, with the present embodiment, a state in which the fuel cell current is completely zeroed can be produced and a highly accurate current sensor offset correction can be made without changing the generation termination voltage of the fuel cell.

Furthermore, a state in which the fuel cell current is completely zeroed can be produced and a highly accurate current sensor offset correction can be made without electrically disconnecting the fuel cell.

The present invention has high utility because the 0 point correction of fuel cell current can be reliably achieved with a simple structure by detecting the output of a current sensor after the voltage between the terminals of the load has been raised with a voltage regulating unit and determining the correction value of the fuel cell current detected with the current sensor based on the detected output of the current sensor and the present invention can be widely used in fuel cell systems requiring such a correction.

## Claims

1. A fuel cell system comprising:
a fuel cell connected to a load to supply power thereto;
a voltage regulating unit connected between said fuel cell and said load for controlling a voltage between the terminals of said load;
a rectifier, which is connected to said fuel cell side from the connection portion with said voltage regulating unit, and which is between said fuel cell and said load, for preventing the reverse flow of a fuel cell current; and
a current sensor for detecting a fuel cell current, wherein
output of said current sensor after the voltage between the terminals of said load has been raised is detected by said voltage regulating unit, and
correction value of the fuel cell current detected with said current sensor is determined based on the detected current sensor output.

2. The fuel cell system according to claim 1, wherein
the increase in the voltage between the terminals of said load by said voltage regulating unit is carried out once after the voltage has been decreased from the generation termination voltage of said fuel cell.

3. The fuel cell system according to claim 2, wherein
the interval from the decrease in voltage between the terminals of said load from the generation termination voltage of said fuel cell to the increase of said voltage by said voltage regulating unit is 50 msec or more.

4. The fuel cell system according to claims 1 to 3, wherein
the increase in the voltage between the terminals of said load by said voltage regulating unit is conducted up to the generation termination voltage of said fuel cell.

5. The fuel cell system according to any of claims 1 to 3, wherein
said correction value is determined based on an average value of the output of the current sensor within a fixed interval after the voltage between the terminals of said load has been raised by said voltage regulating unit.

6. The fuel cell system according to any of claims 1 to 3, comprising a voltage comparison unit for comparing a voltage between the terminals of said fuel cell with a voltage between the terminals of said load, wherein
the correction value of the fuel cell current detected with said current sensor is determined based on the output of said current sensor within an interval in which the voltage between the terminals of said fuel cell is lower than the voltage between the terminals of said load.

7. The fuel cell system according to any of claims 1 to 3, wherein
said voltage regulating unit comprises a DC voltage converter, and a battery is connected to said DC voltage converter.

8. A method of correcting a fuel cell current detected with a current sensor of a fuel cell connected to a load for supplying power thereto, comprising the steps of:
detecting the output of said current sensor after a voltage between the terminals of said load has been raised, while preventing the reverse current flow from said load side to said fuel cell side; and
determining a correction value of the fuel cell current detected by said current sensor based on the detected output of the current sensor.

9. The method according to claim 8, wherein
the increase in the voltage between the terminals of said load is carried out once after the voltage has been decreased from the generation termination voltage of said fuel cell.

10. The method according to claim 9, wherein
the interval from the decrease in voltage between the terminals of said load from the generation termination voltage of said fuel cell to the increase of said voltage is 50 msec or more.

11. The method according to any of claims 8 to 10, wherein
the increase in the voltage between the terminals of said load is
conducted up to the generation termination voltage of said fuel cell.

12. The method according to any of claims 8 to 10, wherein
said correction value is determined based on an average value of the output of the current sensor within a fixed interval after the voltage between the terminals of said load has been raised.

13. The method according to any of claims 8 to 10, wherein
the correction value of the fuel cell current detected with said current sensor is determined based on the output of said current sensor within an interval in which the voltage between the terminals of said fuel cell is lower than the voltage between the terminals of said load.
